# EUROPEAN PATENT APPLICATION

(11) **EP 4 043 777 A1**
(43) Date of publication of application: **17.08.2022**
(21) Application number: 21157451.2
(22) Date of filing: 16.02.2021
(51) Int. Cl.: F16M 11/14, F16M 11/18, F16M 11/20, F16M 11/22, G01C 21/00

(54) **MODULE FOR POSITIONING AND ORIENTING AN OBJECT, SYSTEM COMPRISING SAID MODULE, USE, AND METHOD**

(71) Applicant: Resonic GmbH, 12489 Berlin (DE)
(72) Inventor: KLÖPPER, Robert, 12489 Berlin (DE)
(74) Representative: Pfenning, Meinig & Partner mbB

(57) **Abstract**

The application concerns a module (1, 1', 1") for positioning and orienting an object (28), comprising a carrier (2) comprising one or several stops (3, 3', 8); a platform (4) configured to hold the object (28), the platform (4) comprising one or several positioning elements (6, 6', 8), wherein the platform (4) is movably attached or attachable to the carrier (2), the carrier (2) constraining the platform (4) in at least one degree of freedom, and the platform (4) is selectively movable into any one of a plurality of discrete positions with respect to the carrier (2), each of the plurality of discrete positions defined by at least one of the one or several positioning elements (6, 6', 8) engaging with a corresponding one of the one or several stops (3, 3', 8); a movement mechanism (13) configured to translate and/or rotate the platform (4) with respect to the carrier (2) such as to move the platform (4) into any selected one of the plurality of discrete positions. The application further concerns a system (22) comprising such a module (1, 1', 1"), as well as a use of such a module (1, 1', 1") and a method for measuring inertial properties of an object (28).

## Description

The application concerns a module for positioning and orienting an object. Such a module has applications in many fields, being applicable with particular benefit in the field of measurement technology, in particular for measuring inertial properties. The application further concerns a system comprising such a module, a use of such a module, and a method for measuring inertial properties.

Precise measurements of various kinds as well as many other uses in industry and research require accurate and precise positioning and orienting of an object. In particular, it is often required to stably and repeatably set a predetermined position and orientation of the object or several such positions and orientations in sequence, wherein the object needs to be repositioned by translation and/or rotation.

For instance, measuring inertial properties of an object - such as coordinates of a center of gravity or a center of mass, a moment of inertia, a product of inertia, or an inertia tensor (comprising on-diagonal moments of inertia and off-diagonal products of inertia) of a rigid body - using oscillating systems such as pendulums typically requires stable positioning as well as accurate knowledge of coordinates corresponding to all degrees of freedom of the object in multiple stably and repeatably settable positions and/or orientations.

Modules for positioning and orienting (in short: positioning modules) are known in the art, as are measurement systems including such modules and corresponding methods. For instance, in a known positioning module, several actuated translation stages and rotation stages are coupled to one another to permit continuous translation and rotation of an object in the required number of degrees of freedom. In a module of this type, stable and repeatable positioning is achieved by providing, for each of the translation and rotation stages, actuators with high stiffness and high accuracy. Such an approach may lead to a complex, heavy, and costly design as well as narrow manufacturing tolerances.

In view of the state of the art, a problem to be solved by the present application is to propose a module for positioning and orienting an object with the aforementioned desired properties and avoiding at least some of the shortcomings of known positioning modules. Further, a system for measuring inertial properties of an object, a use of such a module, and a method for measuring inertial properties, are to be proposed.

The problem is solved by a module according to claim 1, a system according to claim 11, a use according to claim 14, and a method according to claim 15. Preferred embodiments, further developments, and applications become apparent in combination with the dependent claims.

The proposed module for positioning and orienting an object comprises a carrier comprising one or several stops, a platform configured to hold the object, the platform comprising one or several positioning elements, and a movement mechanism.

The platform is movably attached or attachable to the carrier, the carrier constraining the platform in at least one degree of freedom, preferably in three or fewer degrees of freedom, more preferably in exactly two degrees of freedom.

The platform is selectively movable into any one of a plurality of discrete positions with respect to the carrier, each of the plurality of discrete positions defined by at least one of the one or several positioning elements engaging with a corresponding one of the one or several stops.

The movement mechanism is configured to translate and/or rotate the platform with respect to the carrier such as to move the platform into any selected one of the plurality of discrete positions.

The proposed module enables stable and repeatable setting of any of the plurality of discrete positions. Providing positioning elements and corresponding stops to define the plurality of discrete positions decouples the movement mechanism from the means by which precise and repeatable positioning is achieved. The movement mechanism therefore requires neither high stiffness nor high accuracy, reducing complexity, weight, and cost of the module.

Moreover, in applications such as measuring inertial properties, accurate knowledge of the discrete positions is sufficient and may be achieved by calibration measurements, whereas accurate predetermination of said positions at the time of manufacture is not required. Manufacturing tolerances may therefore be relaxed compared to other technologies.

Furthermore, the ability to set an appropriate number of discrete positions at appropriate distances is sufficient for measurements of inertial properties. The required complexity, weight, and/or cost of the module may thus be further reduced as compared to modules with continuous adjustments. For instance, it is usually sufficient for such measurements to provide combinations of two tilted positions (for instance, 0 degrees and 45 degrees with respect to a horizontal plane), six rotational positions, and six to twenty translational positions.

Providing a movement mechanism as described obviates any need for manual repositioning of the platform, thus facilitating in particular the handling of large and/or heavy objects. The platform being movably attached to the carrier and constrained in at least one degree of freedom further facilitates handling and prevents the platform from tipping over and/or detaching from the carrier - in particular when the carrier is suitably attached to an external structure such as a base - without the need to make the platform overly large, even when an object with a high center of mass is attached to the platform.

The positioning elements engaging with the stops means the positioning elements interacting with the stops in such a way as to constrain relative motion of a positioning element and the corresponding stop in at least one degree of freedom.

The carrier may, in particular, constrain the platform in at least one translational degree of freedom (i.e. such that translational motion of the platform with respect to the carrier is restricted to a two-dimensional manifold, in particular a plane), preferably two translational degrees of freedom (i.e. such that translational motion of the platform with respect to the carrier is restricted to a one-dimensional manifold, in particular a straight line).

The movement mechanism may be actuated to effect translation and/or rotation of the platform with respect to the carrier and/or it may permit manual translation and/or rotation, at least in certain degrees of freedom.

The module may further comprise a locking mechanism configured, when the platform is positioned in the selected discrete position, to exert a force (hereinafter also referred to as locking force) pushing the at least one of the one or several positioning elements onto the respective one of the one or several stops with which said positioning element is engaged to reproducibly lock the platform into the selected discrete position. Providing a locking mechanism enables particularly stable and repeatable positioning, independent of the stiffness of the movement mechanism. Alternatively or additionally to a physical locking mechanism, the locking force may be provided by gravity.

The locking mechanism may be configured to, when the platform is locked into the selected position, constrain the position and orientation of the platform in six degrees of freedom with respect to the carrier. In this way, all degrees of freedom of a rigid body object with respect to the carrier are kinematically determined in the discrete positions.

The movement mechanism may comprise a rotatable spindle and/or a belt drive for actuating the movement mechanism for actuating the movement mechanism. The movement mechanism and the locking mechanism may share a common actuating component. In this way, a particularly simple construction of the module is possible. In particular, the common actuating component may be a rotatable spindle, wherein the spindle may be rotatable to create a translational and/or rotational movement of the platform with respect to the carrier and/or to provide all or at least part of the locking force. The spindle may be actuated manually and/or by a driven actuator. The spindle may comprise a torque-limiting component to provide a predetermined amount of locking force. The spindle may be configured to be tightened by means of a torque wrench. The movement mechanism and the locking mechanism may alternatively comprise separate actuating components, in particular wherein the movement mechanism is configured to be disengaged when the locking mechanism is engaged.

The carrier may comprise a plurality of stops. The platform may comprise a plurality of positioning elements. Preferably, the carrier comprises a plurality of stops and the platform comprises a plurality of positioning elements. Each of the plurality of discrete positions may be defined by a subset of at least two, preferably at least three, of the plurality of positioning elements simultaneously engaging with a corresponding subset of at least two, preferably at least three, of the plurality of stops.

In the case where at least three positioning elements engage with respective stops, position and orientation of the platform in six degrees of freedom may be achieved by each stop being configured to constrain the platform in two degrees of freedom, as long as the degrees of freedom constrained by each of the stops are mutually independent. The plurality of positioning elements and/or the plurality of stops may comprise more than one type of positioning element or stop, respectively, wherein the different types of positioning elements or stops, respectively, may be configured to constrain different numbers of degrees of freedom. Constraining a combination of a stop and a positioning element in one or two degrees of freedom is readily achieved by simple designs of the positioning elements and stops, for example as follows.

At least one of the one or more positioning elements and/or at least one of the one or more stops may comprise a convex, in particular spherical or cylindrical, surface section. The convex surface section may be configured to engage with a groove formed by one or two planar or convex, in particular spherical or cylindrical or conical, surface sections of a corresponding stop or positioning element, respectively.

The plurality of discrete positions may comprise at least six, preferably nine, more preferably at least eighteen discrete positions, each pair of discrete positions differing in at least one translational and/or rotational degree of freedom. Providing a sufficient number of distinct discrete positions enables complete and accurate determination of properties of interest. For instance, providing six discrete positions enables measuring an inertia tensor comprising six independent entries (symmetric 3-by-3 tensor). Providing nine discrete positions additionally enables measuring coordinates of a center of gravity. Further increasing the number of positions (i. e. the positioning resolution) may improve the accuracy of the measurement.

The movement mechanism may comprise a rail for translating the platform with respect to the carrier, providing a simple and robust way in which the carrier constrains the platform (in particular, by means of a rail, the carrier may constrain translational movement of the platform in two translational degrees of freedom).

The movement mechanism may comprise a ball joint for rotating the platform with respect to the carrier. In particular, the ball joint may be disposed such as to permit rotation of the platform about an axis of rotation perpendicular to a surface of the carrier on which the platform is attached and/or perpendicular to a holding surface of the platform (the holding surface configured for holding the object) as well as to permit tip and tilt about axes parallel to the surface of the carrier on which the platform is attached, i.e. overall movement in three rotational degrees of freedom. The ball joint may be formed with high stiffness. The ball joint may act as a permanently engaged combination of a positioning element and a stop.

The module may further comprise a ring bearing, typically a ball or roller bearing. The ring bearing may be disposed in parallel, in particular concentrically, with the ball joint. Preferably, the ring bearing may be formed with low stiffness, in particular lower stiffness than the ball joint, and comprise a bearing component configured to rotate along with rotation of the platform about the axis of rotation perpendicular to the holding surface of the platform. In this configuration, the ring bearing may, in particular, be configured to transmit a torque required for tip/tilt of the platform.

The carrier may be rigidly connectable or connected to a base, for example a base providing a large mass or a rigid connection to a fixed structure (such as a ground or floor) for stable positioning and/or a base comprising a pendulum for dynamic measurements of inertial properties and/or a moment measurement device for measuring center of mass coordinates.

The platform may comprise a holding surface for holding the object, the holding surface forming an acute first angle (α) with the carrier, wherein the first angle has the same value in each of the plurality of discrete positions. In this case, and when the carrier is rigidly connected to the base, the carrier may form an acute second angle (β) with a vertical axis of the base such that the value of the first angle and the value of the second angle add up to 90 degrees.

If the vertical axis of the base is perpendicular to a horizontal plane such as a ground plane or floor plane, this implies that the holding surface, in any of the plurality of discrete positions, can assume either of exactly two angles with respect to said horizontal plane: 0 degrees (horizontal positions) or (2α (inclined positions). This provides a preferred set of discrete positions for, e.g., measurement of inertial properties.

Preferably, α may be 22.5 degrees, and β may correspondingly be 67.5 degrees, such that the angle between the holding surface and said plane is 2α = 45 degrees in the inclined positions.

The proposed system for measuring inertial properties of an object comprises a module of the proposed kind, a base rigidly connectable or connected to the module, and a sensor configured to measure at least one static and/or dynamic parameter of the module.

The base may, in particular, comprise a pendulum configured for oscillatory motion of the module, wherein the at least one measured parameter comprises at least one of an amplitude, a velocity, a time course, a period, a frequency, and a spectrum of the oscillatory motion. The pendulum may, for instance, include an air bearing or a spring bearing.

The use of oscillatory devices such as pendulums for the determination of inertial properties (e.g., center of mass, moment of inertia, inertia tensor) is known in the art and requires repeatable and stable positioning of the object in a plurality of discrete positions, such as advantageously provided by the proposed module and system. The underlying principles of such measurements and their interpretation are described in more detail, for example in documents EP 2 997 341 A1, EP 2 997 342 A2, and EP 2 508 861 A1.

The system may further comprise calibrating means configured to determine, in each one of the plurality of discrete positions, an inertial property of the module (without the object) and/or a position and orientation of the platform with respect to a reference structure. Such a calibrating measurement may be used in conjunction with the at least one measured parameter, to accurately determine the desired inertial properties. For instance, determining a position and/or orientation of the platform with respect to a reference structure provides precise knowledge of the plurality of discrete positions. Determining an inertial property of the module itself, such as a moment of inertia of the empty platform or a center of mass position (derived from a static tilting torque), may provide a reference for measurements of the object.

As noted throughout this description, the use of a module of the proposed kind for measuring at least one mass property and/or inertial property of an object (for instance, using the proposed system and/or the proposed method) has particular advantages. The proposed method for measuring inertial properties of an object using a system as proposed above comprises at least the following steps:
attaching the object to the platform in a fixed position and orientation with respect to the platform;
for each position of a subset of the plurality of discrete positions, the subset comprising at least two different positions,
   moving the platform into said position by means of the movement mechanism,
   locking the platform into said position using the locking mechanism,
   measuring, using the sensor, at least one static and/or dynamic parameter of the module including the held object while the platform is locked into said position;
determining, based on the detected parameters, at least one mass property and/or inertial property of the object.

The proposed use and/or method may comprise further steps in accordance with the features of the module and/or system as described above. For instance, the method may comprise, in each of the subset of discrete positions, causing a pendulum in the base of the system to oscillate and/or in each of the subset of discrete positions, determining, a position and orientation of the platform with respect to a reference structure.

The above, as well as other aspects and advantages of the subject matter of this application, will become apparent to those skilled in the art from the following detailed description of exemplary embodiments when considered in the light of the accompanying schematic drawings, wherein, in schematic representations,
Fig. 1 shows a perspective view of a module for positioning and orienting an object,
Fig. 2 shows a different perspective view of the module of Fig. 1,
Fig. 3A to 3C show perspective views of the module of Fig. 1 with the platform in different discrete positions,
Fig. 4 shows a perspective view of a detail of the module of Fig. 1 (with certain components not shown for better clarity),
Fig. 5 shows a perspective view of another detail of the module of Fig. 1 (corresponding to the box with a dashed outline in Fig. 1),
Fig. 6 shows a perspective view of a part of a module for positioning and orienting an object according to a different example,
Fig. 7 shows a perspective view of a system for measuring inertial properties of an object comprising a module according to a further example,
Fig. 8A to 8C show side views the system of Fig. 6 during different steps of a method for measuring inertial properties of an object.

Recurring and similar features in the drawings are provided with identical reference numerals.

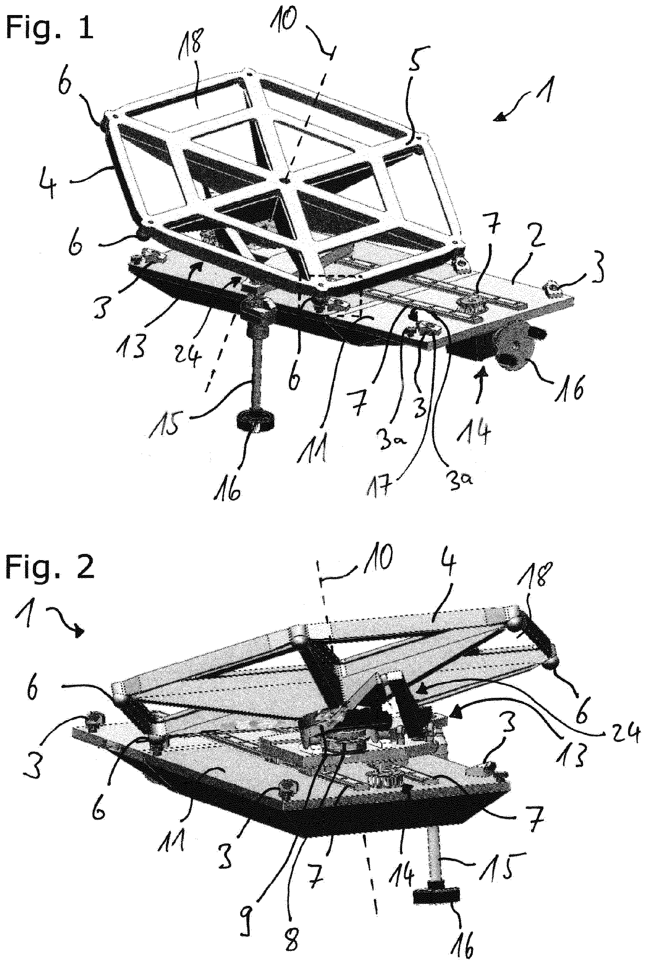

The module 1 for positioning and orienting an object shown, from different perspectives, in Fig. 1 and Fig. 2 comprises a carrier 2 comprising a plurality of stops 3, a platform 4 configured to hold the object (not shown) on a holding surface 5, the platform 4 comprising a plurality of positioning elements 6, and a movement mechanism 13 configured to translate and rotate the platform 4 with respect to the carrier 2.

In different examples, the module 1 may only comprise one positioning element 6 and/or one stop 3 or different numbers of said elements, depending on the number of object positions required by an application.

The platform 4 is movably attached to the carrier 2 via a pair of rails 7 configured for translating the platform 4 with respect to the carrier 2, the carrier 2 thereby constraining the platform 4 in two translational degrees of freedom (namely such that translational motion of the platform 4 with respect to the carrier 2 is restricted to a straight line). The platform 4 may be attached to the carrier 2 by different means, for example two stacked rail systems, such that the carrier 2 constrains the platform 4 in at least one degree of freedom.

The movement mechanism 13 comprises a ball joint 8 for rotating the platform 4 with respect to the carrier 2 about a rotation axis 10 perpendicular to the holding surface 5 as well as about tip/tilt axes 12 parallel to a carrier surface 11 of the carrier 2 on which the platform 4 is attached via the rails 7 (i.e. overall rotational motion in all rotational degrees of freedom within a motion range of the ball joint). The ball joint 8 is formed with high stiffness.

In the following, reference is again made to Fig. 1 and Fig. 2. The movement mechanism 13 is actuated by means of a belt drive 14 to effect translation of the platform 4 with respect to the carrier 2 along the rails 7 and by means of a rotatable spindle 15 to effect, via a lever mechanism 24, rotation of the platform 4 with respect to the carrier 2 around the tip/tilt axes 12.

The platform 4 is connected to the lever mechanism 24 via a ring bearing 9 disposed in parallel with the ball joint 8 (the ball joint 8 is arranged concentrically with the ring bearing and is connected to the platform through a central opening of the ring bearing 9). The lever mechanism 24 and the ring bearing 9 are formed with low stiffness compared to the ball joint 8. The ring bearing 9 comprises a bearing component configured to rotate along with rotation of the platform 9 about the rotation axis 10 and a component that is rotationally fixed with respect to the carrier 2. The ring bearing 9 is configured to transmit a torque required for tip/tilt of the platform 4.

Movement of the belt drive 14 and the rotatable spindle 15 is effected manually, by means of manual operation means 16 (such as knobs and/or wheels). Likewise, rotation of the platform 4 around the rotation axis 10 by means of the ball joint 8 is effected manually, by applying torque to the platform 4 around the rotation axis 10. However, actuated components to effect any or all of the aforementioned motions may optionally be provided. Control means such as a keypad and/or an external communications interface may be provided to control such actuated components

Alternatively, different movement mechanisms and/or means of actuating/operating the movement mechanism may be provided. For instance, actuation of movement along the rail may be provided by means of an additional rotatable spindle.

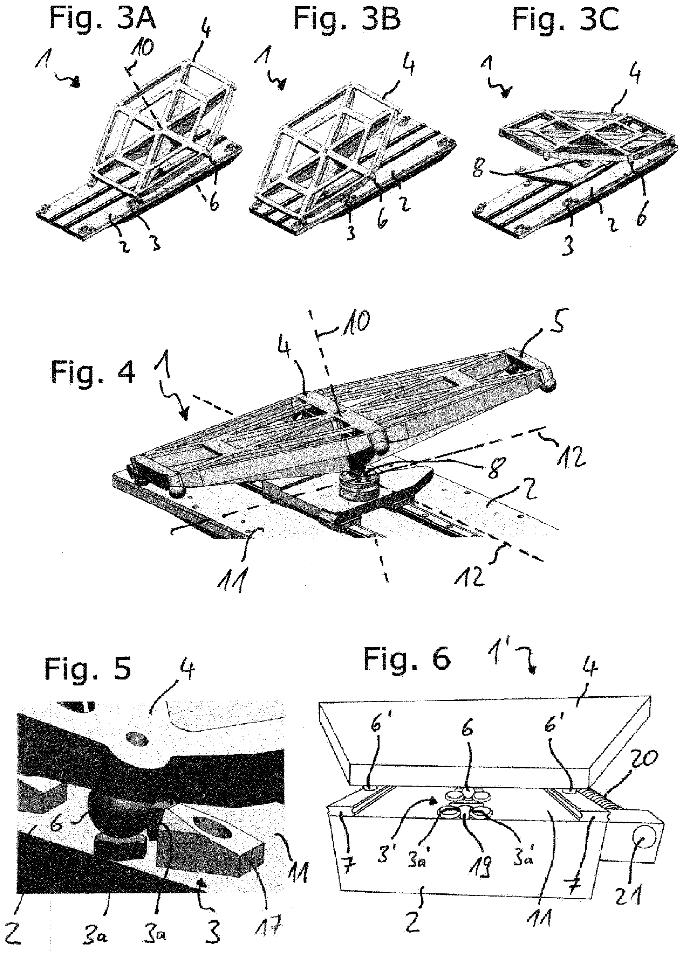

The platform 4 is selectively movable into any one of a plurality of discrete positions with respect to the carrier 2. Some examples of such discrete positions are shown in Fig. 3A to 3C. Each of the plurality of discrete positions is defined by a subset of three of the plurality of positioning elements 6 simultaneously engaging with a corresponding subset of three of the plurality of stops 3. Here, the ball joint 8 acts as a permanently engaged combination of a positioning element (ball) and a stop (opening to receive the ball).

In different examples, different numbers of positioning elements and corresponding stops may engage with one another in the discrete positions.

The positioning elements 6 engaging with the stops 3 means each of the positioning elements 6 interacting with the corresponding stop 3 in such a way as to constrain relative motion of a positioning element 6 and the corresponding stop 3 in at least one degree of freedom, in the present example two degrees of freedom.

The plurality of discrete positions in the present example comprises eighteen different discrete positions (defined by the six positioning elements 6, the six stops 3, and the additional positioning element provided in the form of the ball joint 8). In counting these positions, it has to be taken into account that in each of the three positions shown in Fig. 3A to Fig. 3C, the platform 4 may additionally be rotated around the rotation axis 10 into any one of six positions. While these positions are indistinguishable due to the symmetry of the platform, the object will, in general, not possess the same symmetry. It is also not required for the platform to be symmetrical as in this example.

Instead of eighteen positions, different numbers of discrete positions are possible. At least nine positions are preferred to enable complete and accurate determination of, for instance, an inertia tensor comprising six independent entries.

In the case shown here (three positioning elements engaging with three stops), position and orientation of the platform 4 in six degrees of freedom is achieved by each stop 3 being configured to constrain the platform in two degrees of freedom, since the degrees of freedom constrained by each of the stops 3 are mutually independent. As noted, the ball joint 8 acts as a permanently engaged combination of a positioning element and a stop, wherein the ball joint 8 constrains the platform 4 in two degrees of freedom by way of connecting the platform 4 to the rails 7.

As shown in Fig. 1 (and, enlarged, in the detail view of Fig. 5), each of the positioning elements 6 comprises a convex spherical surface section formed as a spherical cap. The convex spherical surface section is configured to engage with a groove formed by two planar surface sections 3a of a corresponding stop 3 to constrain motion of the platform 4 in two degrees of freedom. One of the planar surface sections 3a is supported by the carrier surface 11, the other one by an angle bracket 17. As best seen in Fig. 1 and Fig. 2, the grooves formed by stops 3 on opposing sides of the carrier 2 are angled with respect to one another such that motion of the positioning elements 6 along the grooves is excluded.

The positioning elements and/or the stops may alternatively be formed in different ways. For instance, at least one of the one or more stops may comprise a convex, in particular spherical or cylindrical or conical, surface section, and/or at least one of the positioning elements may comprise a planar surface section and/or a groove.

The module 1 further comprises a locking mechanism configured, when the platform 4 is positioned in a selected discrete position, to exert a force (hereinafter also referred to as locking force) pushing the respective positioning elements 6 defining the selected position onto the respective stops 3 with which said positioning elements 6 are engaged to reproducibly lock the platform 4 into the selected discrete position.

In the present example, the locking mechanism and the movement mechanism 13 share common actuating components, namely the rotatable spindle 15 and the belt drive 14. In addition to creating rotational and translational movement, respectively, of the platform 4 with respect to the carrier 2, these actuating components provide part of the locking force in that they may be tightened to push the positioning elements 6 into the receiving surfaces 3a of the stops 3. The spindle may comprise a torque-limiting component to provide a predetermined amount of locking force. The spindle may be configured to be tightened by means of a torque wrench. The movement mechanism and the locking mechanism may alternatively comprise separate actuating components, in particular wherein the movement mechanism is configured to be disengaged when the locking mechanism is engaged.

The locking mechanism is configured to, when the platform 4 is locked into the selected position, constrain the position and orientation of the platform 4 in six degrees of freedom. In this way, all degrees of freedom of a rigid body object are kinematically determined in the discrete positions.

The platform 4 of the illustrated example comprises lightening holes 18 to decrease a mass of the platform and/or to facilitate attachment of the object. The lightening holes 18 are optional and may be left out in different examples.

The module 1' for positioning and orienting an object shown, in part, in Fig. 6 is generally similar to the module 1 described above. In the following, only differences with respect to the module 1 are described.

Whereas, in module 1, the rails 7 are provided in a central portion of the carrier 2, and the stops 3 are provided near lateral edges of the carrier 2, the rails 7 of the module 1' are provided near lateral edges of the carrier 2 in this case, and the stops 3 are provided in a central portion of the carrier 2.

The platform 4 of module 1' comprises a plurality of positioning elements 6 as well as a plurality of positioning elements 6' of a different type. Each of the positioning elements 6 comprises a convex spherical surface section formed as a spherical cap. The convex spherical surface section is configured to engage with a groove formed by two cylindrical surface sections 3a' of a corresponding stop 3' to constrain motion of the platform 4 in two degrees of freedom. The cylindrical surface sections 3a' are part of cylinders inserted into a recess 19 in the carrier surface 11 of the carrier 2. The grooves formed by stops 3' on opposing sides of the carrier 2 are angled with respect to one another such that motion of the positioning elements 6 along the grooves is excluded.

The positioning elements 6' are formed as protruding elements with a convex surface section at respective end portions. The convex surface section of each of the positioning elements 6' is configured to engage with a planar top surface of one of the rails 7, thereby each constraining the platform 4 in one degree of freedom.

As described above (with reference to the module 1), a combination of a ball joint (acting as a permanently engaged combination of a positioning element and a stop) and the rails 7 constrains the platform in the remaining two degrees of freedom.

The combination of positioning elements 6, 6' and the respective stops 3' and rails 7 of module 1' constrain the position of the platform 4 with respect to the carrier 2 in an equivalent way to the positioning elements and stops of module 1.

The positioning elements and/or the stops may alternatively be formed in different ways. For instance, at least one of the one or more stops may comprise a convex, in particular spherical or cylindrical or conical, surface section, and/or at least one of the positioning elements may comprise a planar surface section and/or a groove.

The positioning mechanism of module 1' comprises an additional rotatable spindle 20 configured to effect translation of the platform 4 with respect to the carrier 2 along the rails 7. A port 21 is provided for insertion of a wrench, in particular a torque wrench, to rotate the additional spindle 20. However, a driven actuator may be provided additionally or alternatively. The spindle may comprise a torque-limiting component to provide a predetermined amount of locking force.

The additional rotatable spindle 20 acts as common actuating component of the movement mechanism and the locking mechanism of the module 1', i.e. in addition to creating rotational (tip/tilt) movement, of the platform 4 with respect to the carrier 2, the additional spindle 20 provides part of the locking force in that it may be tightened to push the positioning elements 6, 6' onto the receiving surfaces of the corresponding stops.

The platform 4 of the module 1' is solid, i.e. it does not include lightening holes, though lightening holes may alternatively be provided.

In either of the examples described above (i.e. module 1 or module 1') or any other example, the carrier may be rigidly connectable or connected to a base, for example a base providing a large mass or a rigid connection to a fixed structure (such as a ground or floor) for stable positioning and/or a base comprising a pendulum for dynamic measurements of inertial properties.

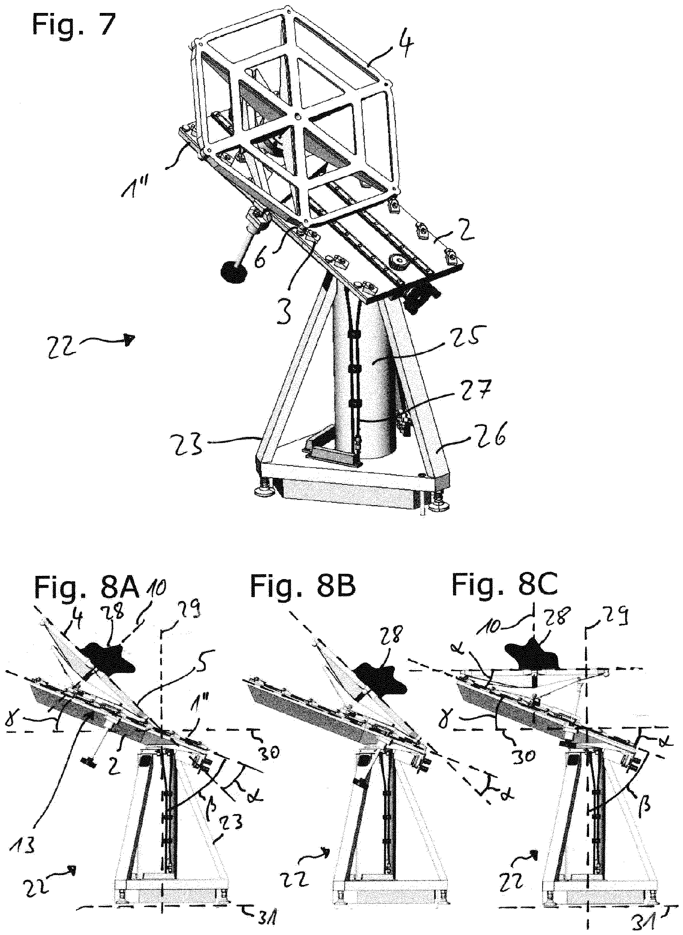

The system 22 for measuring inertial properties of an object shown in Fig. 7 comprises such a base 23 as well as a module 1" positioning and orienting an object according to a further example (modules 1, 1', or any other example of the module proposed here could alternatively be used). The base 23 is reversibly rigidly connectable to the module 1", for example by means of a flange connection. Fig. 4 shows the module 1" connected to the base 23. Alternatively, the module 1" may be permanently rigidly connected to the base 23.

The module 1" is largely similar to the module 1 described above. However, instead of six stops 3, the module 1" comprises a larger number (for instance, fourteen) of stops 2 such as to allow for a larger number of discrete positions to be set.

The base 23 comprises a torsional pendulum housed within a housing 25, the housing 25 being supported by a frame 26. The pendulum is configured for oscillatory motion of the module connected thereto. The pendulum is supported, for oscillation, by an air bearing which may be supplied with air via pressure lines 27. Other types of pendulum (such as a planar pendulum) and /or other ways of supporting the pendulum (for instance, by springs) may be used.

The system 22 further comprises a sensor unit (contained in the housing 25) configured to measure dynamic parameters of the module, such as an amplitude, an angular velocity, a time course, a period, and/or a frequency of the oscillatory motion. The sensor unit may, for example, comprise one or more optical sensors and/or one or more capacitive sensors and/or one or more inductive sensors and/or one or more mechanical sensors (such as a strain gauge) and/or other suitable sensors.

The system 22 comprises a determination unit (such as, for instance, a workstation computer and/or FPGA unit in communication with the sensor unit) configured to determine, based on the measured parameters, one or several inertial properties (e.g., center of mass, moment of inertia, inertia tensor) of the object, for instance according to known methods (cf., e.g., documents EP 2 997 341 A1, EP 2 997 342 A2, and EP 2 508 861 A1).

The system 22 further comprises calibrating means configured to determine, in each one of the plurality of discrete positions, a position and orientation of the platform 4 with respect to the base 23 (as a reference structure) to enable accurate and precise determination of the one or several inertial properties. For determining said position and orientation, the calibrating means may comprise a 3D measurement arm and/or a camera and/or a laser scanner and/or other suitable sensor devices.

A method for measuring inertial properties of an object using the system 22 (or another system of the proposed kind) is described, in the following, with reference to Fig. 8A to 8C, which show the system 22 with the module 1" in different ones of the plurality of discrete positions.

A first method step comprises attaching the object 28 to the platform 4 in a fixed position and orientation with respect to the platform 4.

A second method step comprises moving the platform 4 successively, by means of the movement mechanism 13, into each position of a subset of the plurality of discrete positions, the subset comprising at least two different positions, such as the positions shown, by way of example, in Fig. 8A to Fig. 8C. In the position shown in Fig. 8B, the platform 4 has been linearly displaced along the rails 7 (cf. Fig 1) as compared to the position shown in Fig. 8A. In the position shown in Fig. 8C, the platform 4 has been rotated around the rotation axis 10 as well as around the tip/tilt axis 12 (cf. Fig. 4) as compared to the position shown in Fig. 8A.

For each position of the subset, further method steps comprise locking the platform 4 into said position with respect to the carrier 2 using the locking mechanism, and measuring, using the sensor unit, a set of static and/or dynamic parameters of the module 1" including the held object 28 while the platform 4 is locked into the respective position.

In particular, the method may comprise causing an oscillatory motion of the pendulum in the base 23 along with the module 1" and the object 28. The set of measured parameters may include, in particular, an amplitude, an angular velocity, a time course, a period, and/or a frequency of the oscillatory motion.

A further method step comprises determining, based on the detected set of parameters, at least one inertial property of the object 28, such as a center of gravity, a moment of inertia and/or, in particular, an inertia tensor of the object 28.

The method may comprise further steps. For instance, the method may comprise, in each of the subset of discrete positions, determining, a position and orientation of the platform 4 with respect to a reference structure (such as the base 23) using calibrating means as described above. Due to the accurately repeatable positioning achievable with the module, such a calibration measurement is usually performed after the system is first assembled and does not need to be repeated during normal operation of the system.

A further aspect of the module 1" (which is not limited to module 1", but may also be provided in different examples, such as module 1 or module 1') is explained, in the following, in the context of the system 22 with reference to Fig. 8A to 8C. In each of the plurality of discrete positions, the holding surface 5 forms a first angle α with the carrier surface 11 of the carrier 2, wherein the first angle α is always measured as the acute angle among different angles formed between the holding surface 5 and the carrier surface 11. The first angle α has the same value in each of the plurality of discrete positions.

When the carrier 2 is rigidly connected to the base 23, the carrier surface 11 further forms an acute second angle β with a vertical axis 29 of the base 23, wherein the second angle β is always measured as the acute angle among different angles formed between the carrier surface 11 and the vertical axis 29. The value of the first angle α and the value of the second angle β add up to 90 degrees. Correspondingly, a third angle γ measured as the smallest angle between the carrier surface 11 and the horizontal plane 29 is equal to the first angle α.

The vertical axis 29 of the base 23 is perpendicular to a horizontal plane 30 (e.g., a lane parallel to a floor plane 31). The holding surface 5, in any of the plurality of discrete positions, can thus assume either of exactly two angles with respect to the horizontal plane 30: 0 degrees (horizontal positions, as shown in Fig. 8C) or 2α (inclined positions, as shown in Fig. 8A and Fig. 8B).

Preferably, α is 22.5 degrees, and β is 67.5 degrees, such that the angle between the holding surface 5 and the horizontal plane 30 is 45 degrees in the inclined positions.

### List of reference numerals

- 1, 1', 1": Module,
- 2: Carrier,
- 3, 3': Stop,
- 3a: Planar surface section,
- 3a': Cylindrical surface section,
- 4: Platform,
- 5: Holding surface,
- 6, 6': Positioning element,
- 7: Rail,
- 8: Ball joint,
- 9: Ring bearing,
- 10: Rotation axis,
- 11: Carrier surface,
- 12: Tip/tilt axis,
- 13: Movement mechanism,
- 14: Belt drive,
- 15: Rotatable spindle,
- 16: Manual operation means,
- 17: Angle bracket,
- 18: Lightening holes,
- 19: Recess,
- 20: Additional rotatable spindle,
- 21: Port,
- 22: System,
- 23: Base,
- 24: Lever mechanism,
- 25: Housing,
- 26: Frame,
- 27: Pressure lines,
- 28: Object,
- 29: Vertical axis,
- 30: Horizontal plane,
- 31: Floor plane,
- α: First angle,
- β: Second angle,
- γ: Third angle.

## Claims

1. Module (1, 1', 1") for positioning and orienting an object (28), comprising:
a carrier (2) comprising one or several stops (3, 3', 8);
a platform (4) configured to hold the object (28), the platform (4) comprising one or several positioning elements (6, 6', 8), wherein
the platform (4) is movably attached or attachable to the carrier (2), the carrier (2) constraining the platform (4) in at least one degree of freedom, and
the platform (4) is selectively movable into any one of a plurality of discrete positions with respect to the carrier (2), each of the plurality of discrete positions defined by at least one of the one or several positioning elements (6, 6', 8) engaging with a corresponding one of the one or several stops (3, 3', 8);
a movement mechanism (13) configured to translate and/or rotate the platform (4) with respect to the carrier (2) such as to move the platform (4) into any selected one of the plurality of discrete positions.

2. Module (1, 1', 1") according to claim 1, further comprising a locking mechanism configured, when the platform (4) is positioned in the selected discrete position, to exert a force pushing the at least one of the one or several positioning elements (6, 6', 8) onto the respective one of the one or several stops (3, 3', 8) with which said positioning element (6, 6', 8) is engaged to reproducibly lock the platform (4) into the selected discrete position.

3. Module (1, 1', 1") according to claim 2, wherein the locking mechanism isconfigured to, when the platform (4) is locked into the selected position, constrain the position and orientation of the platform (4) in six degrees of freedom.

4. Module (1, 1', 1") according to claim 2 or 3, wherein the movement mechanism (13) and the locking mechanism share a common actuating component, in particular a rotatable spindle (15).

5. Module (1, 1', 1") according to any one of the preceding claims, wherein
the carrier (2) comprises a plurality of stops (3, 3', 8) and the platform (4) comprises a plurality of positioning elements (6, 6', 8), wherein each of the plurality of discrete positions is defined by a subset of at least two, preferably at least three, of the plurality of positioning elements (6, 6', 8) simultaneously engaging with a corresponding subset of at least two, preferably at least three, of the plurality of stops (3, 3', 8);
and/or
wherein the plurality of discrete positions comprises at least six, preferably at least nine, more preferably at least eighteen discrete positions, each pair of discrete positions differing in at least one translational and/or rotational degree of freedom.

6. Module (1, 1', 1") according to any one of the preceding claims, wherein at least one of the one or more positioning elements (6, 6', 8) and/or at least one of the one or more stops (3, 3', 8) comprise a convex, in particular spherical or cylindrical, surface section.

7. Module (1, 1', 1") according to any one of the preceding claims, wherein the movement mechanism (13) comprises a rail (7) for translating the platform (4) with respect to the carrier (2) and/or a ball joint (8) and/or ring bearing (9) for rotating the platform (4) with respect to the carrier (2) and/or a rotatable spindle (15) and/or a belt drive (14) for actuating the movement mechanism (13).

8. Module (1, 1', 1") according to any one of the preceding claims, wherein the platform (4) comprises a holding surface (5) for holding the object (28), the holding surface (5) forming an acute first angle (α) with the carrier (2), wherein the first angle (α) has the same value in each of the plurality of discrete positions.

9. Module (1, 1', 1") according to any one of the preceding claims, wherein the carrier (2) is rigidly connectable or connected to a base (23).

10. Module (1, 1', 1") according to claim 9, in so far as it depends on claim 8, wherein, when the carrier (2) is rigidly connected to the base (23), the carrier (2) forms an acute second angle (β) with a vertical axis (29) of the base (23) such that the value of the first angle (α) and the value of the second angle (β) add up to 90 degrees.

11. System (22) for measuring inertial properties of an object (28), comprising a module (1, 1', 1") according to claim 9 or 10, a base (23) rigidly connectable or connected to the module (1, 1', 1"), and a sensor configured to measure at least one static and/or dynamic parameter of the module (1, 1', 1").

12. System (22) according to claim 11, wherein the base (23) comprises a pendulum configured for oscillatory motion of the module (1, 1', 1"), wherein the at least one measured parameter comprises at least one of an amplitude, a velocity, a time course, a period, a frequency, and a spectrum of the oscillatory motion.

13. System (22) according to claim 11 or 12, further comprising calibrating means configured to determine, in each one of the plurality of discrete positions, an inertial property of the module (1, 1', 1") and/or a position and orientation of the platform (4) with respect to a reference structure (23).

14. Use of a module (1, 1', 1") according to any one of claims 1 to 10 for measuring at least one inertial property of an object (28).

15. Method for measuring inertial properties of an object (28) using a system (22) according to any one of claims 11 to 13, the method comprising the steps:
attaching the object (28) to the platform (4) in a fixed position and orientation with respect to the platform (4);
for each position of a subset of the plurality of discrete positions, the subset comprising at least two different positions,
moving the platform (4) into said position by means of the movement mechanism (13),
locking the platform (4) into said position using the locking mechanism,
measuring, using the sensor, at least one static and/or dynamic parameter of the module (1, 1', 1") including the held object (28) while the platform (4) is locked into said position;
determining, based (23) on the detected parameters, at least one inertial property of the object (28).
